# EUROPEAN PATENT APPLICATION

(11) **EP 4 163 779 A1**
(43) Date of publication of application: **12.04.2023**
(21) Application number: 22194648.6
(22) Date of filing: 08.09.2022
(51) Int. Cl.: G06F 3/06, G06F 12/02, G06F 11/20

(54) **CONNECTION OF SOLID-STATE STORAGE DEVICES**

(30) Priority: 11.10.2021 GB 202114476
(71) Applicant: The Secretary of State for Business, Energy and Industrial Strategy, London SW1H 0ET (GB)
(72) Inventor: Stone, Edmund Keith, Exeter, EX1 3PB (GB); Horseman, Andrew Mark, Exeter, EX1 3PB (GB); Protts, Michael John, Exeter, EX1 3PB (GB)
(74) Representative: Bryers LLP

(57) **Abstract**

A computing device is disclosed. The computing device comprises a host controller, a plurality of ports for connection to respective solid-state storage devices, a switch for selectively communicating each of the ports with the host controller, wherein the switch is electronically controllable to switch communications between the ports and the host controller.

## Description

### Field of the Disclosure

The present disclosure relates to connection of solid-state storage devices to a host controller.

### Background of the Disclosure

Computing devices may use solid-state storage devices, for example, non-volatile memory cards adhering to the Secure Digital (SD) format, for storing data for read/write operations. The use of such solid-state storage devices may desirably provide high-speed data input/output characteristics along with low-power consumption. Additionally, such devices may typically be relatively small and lightweight, and non-volatile, thereby allowing convenient portability of the device for transferring of data between sites. Such solid-state storage devices may however fail during use, in which case data read/write operations may be disrupted. It is desirable therefore to provide a means for avoiding disruption of a host computing device's data read/write operations in the event of a failure of a solid-state storage device.

### Summary of the Disclosure

An objective of the present disclosure is to provide a means for avoiding disruption of a host computing device's data read/write operations in the event of a failure of a solid-state storage device.

The foregoing and other objectives are achieved by the features of the independent claims. Further implementation forms are apparent from the dependent claims, the description and the Figures.

A first aspect of the present disclosure provides a computing device comprising: a host controller, a plurality of ports for connection to respective solid-state storage devices, and a switch for selectively communicating each of the ports with the host controller, wherein the switch is electronically controllable to switch communications between the ports and the host controller.

Computing devices may use solid-state storage devices, for example, non-volatile memory cards adhering to the Secure Digital (SD) format, for storing data for read/write operations. The use of such solid-state storage may desirably provide high-speed data input/output characteristics along with low-power consumption. Such solid-state storage devices may however fail during use, in which case data read/write operations may be disrupted. Such as failure may be particularly problematic where the computing device is located remotely of a human operator, for example, where the computing device in a remote weather-monitoring station, as the operator may then be required to visit the remote site to physically swap the failed device, e.g., to swap out the failed SD card.

Providing a computing device with a plurality of individually addressable solid-state storage devices may advantageously provide improved resilience, inasmuch that in the event of failure of one of the storage devices the computing device may utilise another of the storage devices, allowing continued operation of the computing device. A problem may be encountered however in that some host devices may support only a single interface for communication with such solid-state storage devices. In such applications, switching between the host device and the solid-state storage devices may be required to allow addressing by the host device of plural solid-state storage devices. An approach to solving this problem is the provision of a manually-operable switch located locally to the storage devices for switching the communication line between the host device and the storage devices. Such a switch may however be suboptimal, for example, the switch may be inconvenient to use, in particular where the computing device is sited in a remote location, as an operative would be required to visit the site to operate the switch. The provision of an electronically controllable switch for switching communications between a host device, e.g., a host controller, and a plurality of solid-state storage devices may advantageously allow convenient switching of communications between a host device and a plurality of solid-state storage devices. In particular, such an electronically controlled switch may be remotely electronically operated, thereby avoiding the need for an operative to attend a site of a computing device to manually switch solid state storage devices in the event of failure of a storage device. The disclosure thus advantageously allows for convenient switching in and out of circuit of solid-state storage devices, e.g., SD memory cards.

In an implementation, the switch is electronically controllable to switch from a state in which a first of the ports is communicated with the host controller to a state in which a second of the ports is communicated with the host controller.

In an implementation, the switch is for selectively communicating each of the ports with the host controller via a common communication line, and the switch is electronically controllable to switch communications between the ports and the host controller via the common communication line. In other words, in examples, the switch may function to selectively connect the ports to a common communication line. The use of the common communication line may represent a simple and efficient means for communicating data.

In an implementation, each of the plurality of ports comprise a plurality of contacts for connection to a corresponding plurality of contacts of a respective solid-state storage device, the switch is for selectively communicating the plurality of contacts of each of the ports with the host controller via respective communication lines, and the switch is electronically controllable to simultaneously switch communications between the plurality of contacts of the ports and the host controller. In other words, in examples, the switch may switch multiple distinct communication lines between the host controller and each of the ports. Advantageously this allows simultaneous switching of the multiple communication lines.

In an implementation, the switch is for selectively connecting each of the ports with the host controller, wherein the switch is electronically controllable to physically switch a communication line between the plurality of ports and the host controller. In other words, in examples, the switch may physically reconfigure an electrical connection between the host controller and the ports. This may advantageously represent a simple and inexpensive means for switching communications between the host controller and the ports.

In an implementation, the switch comprises one or more metal-oxide-semiconductor field-effect transistors (MOSFETs) for switching the communications. The use of MOSFETs may advantageously allow relatively reliable and low power-consuming switching of the communication lines.

In an implementation, the computing device further comprises a switch controller for electronically controlling the switch to switch communications between the ports and the host controller. The switch controller may advantageously allow manual control of the switch by an operator.

In an implementation, the computing device further comprises a plurality of solid-state storage devices, each of the solid-state storage devices being connected to a respective port of the plurality ports. For example, the solid-state storage devices may each comprise an SD card.

In an implementation, each of the solid-state storage devices comprises a Secure Digital storage device.

A second aspect of the present disclosure provides a method for selectively communicating a host controller of a computing device to a plurality of solid-state storage devices, the method comprising: connecting a plurality of solid-state storage devices to a respective plurality of ports of the computing device, electronically controlling a switch of the computing device to switch communications between the ports and the host controller.

In an implementation, the electronically controlling a switch of the computing device comprises electronically controlling the switch to switch from a state in which a first of the ports is communicated with the host controller to a state in which a second of the ports is communicated with the host controller.

In an implementation, the electronically controlling the switch comprises detecting a fault in one of the plurality of solid-state storage devices connected to a port of the plurality of ports, and in response to detection of the fault, electronically controlling the switch to communicate the host controller with another of the solid-state storage devices connected to another port of the plurality of ports.

In an implementation, the electronically controlling the switch comprises electronically controlling the switch to selectively communicate each of the ports with the host controller via a common communication line.

In an implementation, the switch is configurable to communicate a plurality of contacts of each of the ports with the host controller via respective communication lines, and the electronically controlling the switch comprises electronically controlling the switch to simultaneously switch communications between the plurality of contacts of the ports and the host controller.

In an implementation, the switch is for selectively connecting each of the ports with the host controller, and the electronically controlling the switch comprises physically switching a communication line between the plurality of ports and the host controller.

These and other aspects of the disclosure will be apparent from the embodiment(s) described below.

### Brief Description of the Drawings

In order that the present invention may be more readily understood, embodiments of the disclosure will now be described, by way of example, with reference to the accompanying drawings, in which:
Figure 1 shows schematically an example of a weather-monitoring system embodying an example implementation of the present disclosure, which includes a central station and a remotely-located monitoring station comprising a computing device;
Figure 2 shows schematically functional modules of the computing device identified previously with reference to Figure 1, including a storage module;
Figure 3 shows schematically components of the storage module identified previously with reference to Figure 2, including a plurality of solid-state storage devices; and
Figure 4 shows processes of a method for using the computing device to perform a function, which includes a process of reading/writing data using the storage module; and
Figure 5 shows processes involved in reading/writing data using the storage module, including a process of switching between the plurality of solid-state storage devices.

### Detailed Description of the Disclosure

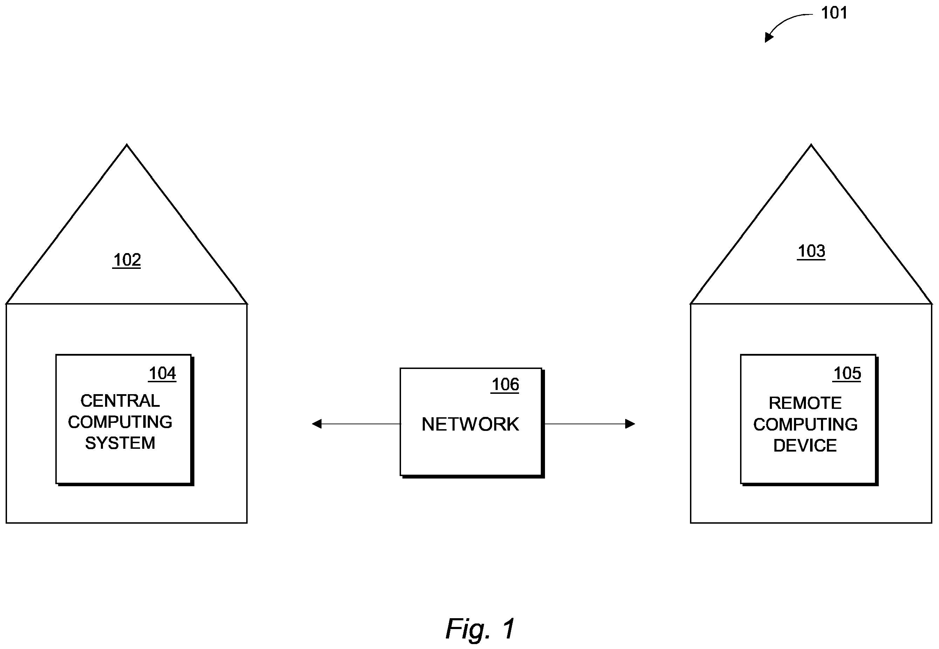

Referring firstly to Figure 1, an example implementation of the present disclosure is a weather monitoring system 101 for monitoring atmospheric weather conditions. The weather monitoring system 101 comprises a base 102 and a remote monitoring station 103. The base 102 comprises a central computing system 104 for processing weather data. The remote monitoring station 103 comprises a remote computing device 105 for monitoring weather conditions and generating data representing the monitored weather conditions. The remote computing device 105 is in communication with the central computing system 104 via network 106. Network 106 may, for example, be a wireless communication network. The network 106 may include at least one device for communicating data in the network.

In examples, the network 106 may have a low data bandwidth. As a result, the amount of data that may be transferred between the central computing system 104 and the remote computing device 105 via the network 106 may be relatively low. Accordingly, remote computing device 105 may comprise local storage for storing generated data representing the monitored weather conditions. In such a scenario, data may be extracted from the remote computing device 105 by periodic retrieval of the local storage devices.

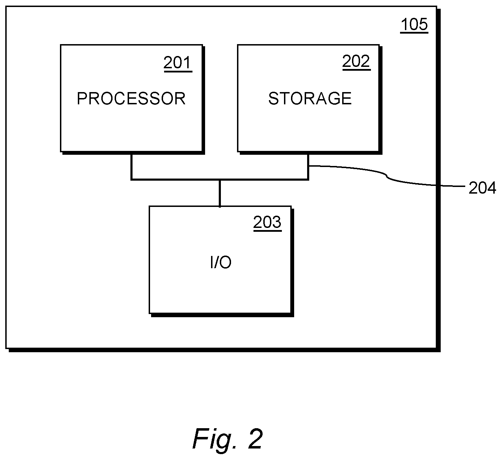

Referring next to Figure 2, in examples remote computing device 105 comprises processor 201, storage module 202, input/output interface 203, and system bus 204. The computing device 105 is configured to run a computer program for monitoring weather conditions and recording data representing the monitored weather conditions.

Processor 201 is configured for execution of instructions of a computer program for monitoring weather conditions and generating data representing the monitored weather conditions. Storage module 202 is configured for non-volatile storage of data generated by the computer program run by processor 201. Input/output interface 203 is configured to connect the computing device 105 to the network 106. The components 201 to 203 of the computing device 105 are in communication via system bus 204.

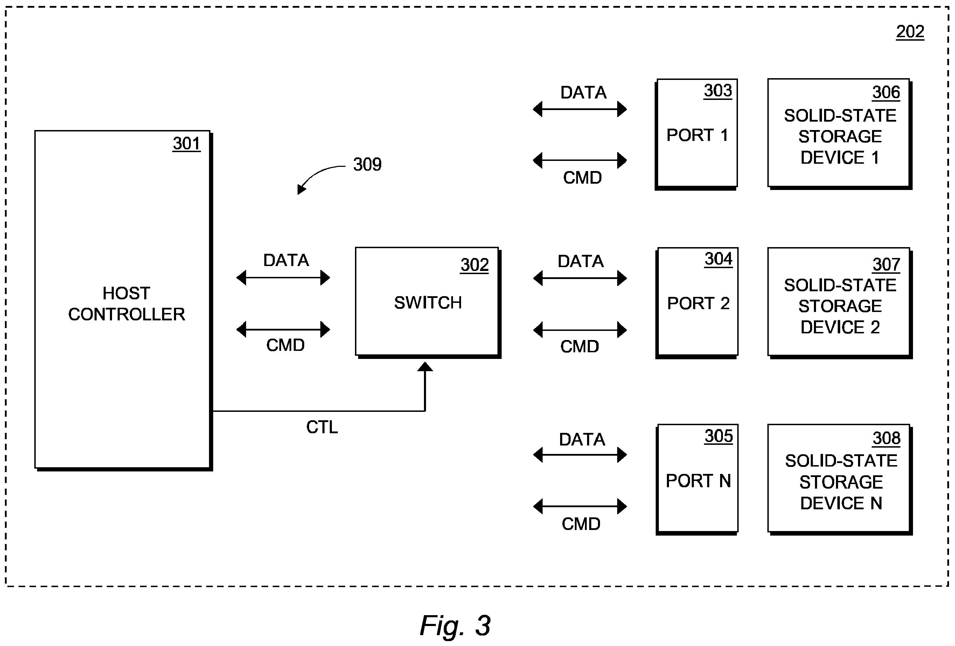

Referring next to Figure 3, in examples, the storage module 202 comprises host controller 301, switch 302, a plurality of ports 303, 304 and 305, and a plurality of solid-state storage devices 306, 307 and 308 connected to the ports 303, 304 and 305 respectively.

The host controller 301 controls the operation of the storage module 202 for reading/writing data to the solid-state storage devices. In examples, the host controller 301 is a microprocessor. In examples, the host controller 301 supports a single host interface for interfacing with the solid-state storage devices 306 to 308. In examples, the host controller 301 may be implemented by the processor 201. In other examples, storage module 202 may comprise a dedicated processor serving as host controller 301.

The host controller 301 comprises bus 309 communicating the host controller 301 with the switch 302, which includes a dedicated data signal line (DATA), a dedicated command signal line (CMD), and a dedicated control line (CTL). The command line CMD carries commands and responses between the host controller 302 and the solid-state storage devices 306 to 308 via the switch 302. The data line DATA carries data signals between the host controller 301 and the solid-state storage devices 306 to 208 via the switch 302. The host controller 301 controls the switch 302 using control signals carried by the control line CTL. Thus, the host controller 301 may electronically control the switch 302 using electrical control signals carried by the control line CTL to dictate which of the solid-state storage devices 306 to 308 it communicates with for reading/writing of data. In examples, bus 309 may comprise further connections between the host controller 301 and the switch 302, for example, power lines, clock signal lines, and/or further data lines.

Switch 302 is functional to selectively communicate the solid-state storage device interface of the host controller 301 with the plurality of ports 303 to 305, and thereby with the plurality of solid-state storage devices 306 to 308 connected to the ports 303 to 205, by switching the data and command communication lines. As previously noted, switch 302 is responsive to a control signal carried by the control line CTL to selectively communicate the host controller 301 with one of the plurality of ports 303 to 305, and so with the corresponding solid-state storage device 306 to 308. For example, in the event that a control signal is received by the switch 302 dictating the use of the solid-state storage device 306, switch 302 may configure the data and command lines DATA, CMD, to communicate the host controller 301 with the port 303 and so the solid-state storage device 306. Switch 302 may thereby allow selective reading/writing of data to the solid-state storage devices 306 to 308.

Switch 302 is electronically controllable by the control signal carried by the control line CTL to switch the data and command lines DATA, CMD respectively. Thus, an electrical control signal may be generated by the host controller 301 and used to switch the switch 302. In examples, the host controller may control the switch 302 using the control line CTL in response to a control signal received by the host controller 301 from the central computing station 104 via the network 106. Thus, an operator of central computing system 104 may remotely control the switch 302.

In examples, switch 302 may physically switch the data line DATA and the command line CMD. in other words, in such examples, the switch may physically change an electrical connection between the host controller 301 and the ports 303 to 305. In examples, switch 302 may comprise one or more metal-oxide-semiconductor field-effect transistors for switching the communication lines. In other examples, switch 302 may comprise alternative means for switching the data and command lines DATA, CMD respectively. For example, switch 302 may alternatively comprise one or more electromagnetic relays for switching the communication lines. In other examples, switch 302 may function as a packet switch, for directing data between the host controller 301 and one of the ports 303 to 305 in dependence on meta data attached to packets output by the host controller 301. In essence, switch 302 should be electronically controllable to selectively control communications between an interface of host controller 301 and the plurality of ports 303 to 305, to thereby facilitate selective reading/writing of data by the host controller 301 to the solid-state storage devices 306 to 308.

The plurality of ports 303 to 305 each comprise electrical contacts terminating the communication lines for electrically connecting to corresponding electrical contacts of the solid-state storage devices 306 to 308. In examples, each of the ports 303 to 305 comprises a data line contact for terminating the data communication line DATA and a command line contact for terminating the command communication line CMD. In examples, each of the ports 303 to 305 may comprise further contacts, for example, power line, clock signal line, and/or further data line contacts. The plurality of ports 303 to 305 may each form a socket for partial insertion of a respective one of the solid-state storage devices 306 to 308.

Each of the plurality of solid-state storage devices 306 to 308 comprises solid-state memory. In examples, each of the solid-state storage devices 306 to 308 may comprise a Secure Digital (SD) card. Solid-state storage devices of this type may desirably provide high-speed data input/output characteristics along with low-power consumption. Additionally, such devices may typically be relatively small and lightweight, and non-volatile. These latter characteristics desirably allow for data to be convenient transferred between the remote computing device 105 and the central computing station 104 by transporting the solid-state storage devices 306 to 308, thereby avoiding the need to transmit high volumes of data via network 106.

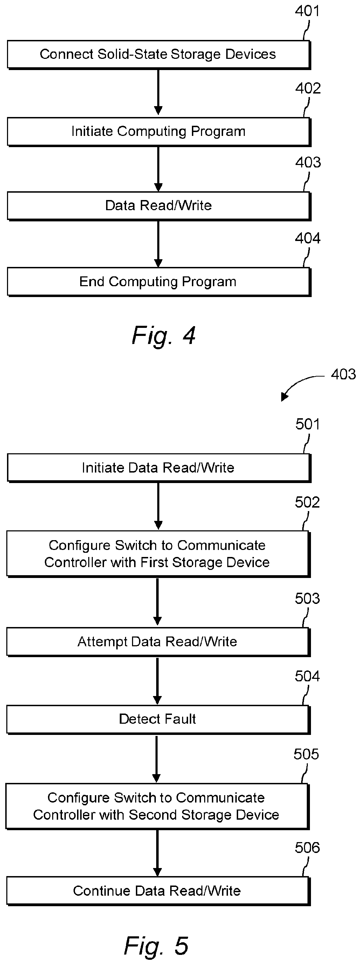

Referring next to Figure 4, in examples, a method of using the weather monitoring system 101 for monitoring weather conditions comprises four stages.

At stage 401, the solid-state storage devices 306 to 308, which may, for example, be SD cards, are connected to the respective port 303 to 305 of the computing device 202. Stage 401 may for example be performed at the point of installation of the computing device 202 in the remote station 103, or may be performed at a point of servicing of the remote station 103.

At stage 402, execution of a computer program by the processor for monitoring weather conditions is initiated. For example, the computer program could be initiated in response to an initiation signal transmitted from the central computing station 104 to the remote computing device 105 via the network 106. The computer program may cause weather conditions to be monitored by the remote computing device using external monitoring equipment, and may generate data representing the monitored weather conditions.

At stage 403, the computer program may attempt to read data from one of the solid-state storage devices 306 to 308, for example, to retrieve operational data associated with execution of the computer program, and/or may attempt to write data to one of the storage devices 306 to 308, for example, to record data representing monitored weather conditions. For example, the computing device 202 may be configured to utilise solid-state storage device 306 as a default, in which scenario stage 403 may involve the host controller 301 sending a control signal to the switch 302 via the control line CTL dictating that communication is established with port 303. In examples, the computing device 202 may utilise the solid-state storage devices 306 to 308 for mutually different storage purposes. For example, storage device 306 may be utilised by the computing device 202 as a source of operational data associated with execution of the computer program, e.g., to store operating system data, whilst another of the storage devices 307 or 308 could be utilised for writing of data generated by the computer program. In this scenario, switching of the communication lines DATA and CMD may be required during execution of the computer program to allow the host controller 301 to alternately read program data from one of the storage devices 306 to 308 and write generated data to another of the storage devices 306 to 308.

At stage 404, execution of the computing program run by the processor 201 may end. For example, the computing program may end automatically following a pre-defined period of weather condition monitoring.

Referring in particular to Figure 5, the method of stage 403 for reading/writing data to one of the solid-state storage devices 306 to 308 may comprises six stages.

At stage 501, the data read/write operation may be initiated. For example, the read/write operation could be initiated by the host controller 301 in response to instructions of the computer program.

At stage 502, the switch 302 is controlled by the computing device 202 to communicate the host controller 301 with a first of the solid state storage devices, e.g., storage device 306. Stage 502 may, for example, involve the host controller 301 sending a control signal to the switch 302 via the control line CTL dictating that communication is established with port 303 to thereby permit communication with storage device 306.

At stage 503, the computing device 202 may attempt to read and/or write data from/to storage device 306. For example, host controller 301 may read data via the DATA line from storage device 306.

At stage 504, the host controller 301 may detect a fault with the initially selected solid-state storage device that affects data read/write operations. For example, in the scenario that the host controller 301 by default writes generated data to/reads data from the solid-state storage device 306, stage 501 may involve the host controller 301 detecting a fault with the solid-state storage device 306, such as corruption of the solid-state storage device 306.

At stage 505 in response to detecting the fault at stage 504, the host controller 301 may send a control signal via the control line CTL instructing the switch 302 to switch communications between the host controller 301 and the ports 303 to 305, from communicating the host controller 301 with the port 303 to communicating the host controller 301 with one of the ports 304 or 305. In examples, this stage may involve the switch 302 simultaneously switching both the data line DATA and the command line CMD. Thus, by this operation, host controller 301 may read/write data from/to solid-state storage device 307 connected to port 304, or solid-state storage device 308 connected to port 305. This stage thus allows for continuation of the data read/write operations of the host controller 301 despite failure of the solid-state storage device 306.

At stage 506, in response to switching of the communications between the host controller 301 and the ports 303 to 305 performed at stage 505, the host controller 301 may continue to perform its data read/write operations.

The present disclosure has been described in detail herein in the context of a weather monitoring station. It should be appreciated however that aspects of the disclosure have broader utility than this specific implementation. In essence, aspects of the present disclosure related to controllable switching communications between a storage controller and a plurality of solid-state storage devices. Accordingly, aspects of the disclosure may have utility in other applications in which switching of data read/write operations of a storage controller between different solid-state storage devices is desirable. For example, aspects of the disclosure may find utility in relation to digital cameras for controlling the storage of image data amongst plural solid-state storage devices, e.g., SD cards, or in relation to smartphone, in which control of data read/write between plural solid-state storage devices is desired. It should be appreciated therefore that the utility of the present disclosure is not limited to implementation in a weather monitoring station.

Although the present invention and its advantages have been described in detail, it should be understood that various changes, substitutions and alterations can be made herein without departing from the spirit and scope of the invention as defined by the appended claims ._In the claims, the word "comprising" does not exclude other elements or steps, and the indefinite article "a" or "an" does not exclude a plurality.

## Claims

1. A computing device comprising:
a host controller,
a plurality of ports for connection to respective solid-state storage devices, and
a switch for selectively communicating each of the ports with the host controller, wherein the switch is electronically controllable to switch communications between the ports and the host controller.

2. The computing device of claim 1, wherein the switch is electronically controllable to switch from a state in which a first of the ports is communicated with the host controller to a state in which a second of the ports is communicated with the host controller.

3. The computing device of claim 1 or claim 2, wherein the switch is for selectively communicating each of the ports with the host controller via a common communication line, and the switch is electronically controllable to switch communications between the ports and the host controller via the common communication line.

4. The computing device of any one of the preceding claims, wherein each of the plurality of ports comprise a plurality of contacts for connection to a corresponding plurality of contacts of a respective solid-state storage device, the switch is for selectively communicating the plurality of contacts of each of the ports with the host controller via respective communication lines, and the switch is electronically controllable to simultaneously switch communications between the plurality of contacts of the ports and the host controller.

5. The computing device of any one of the preceding claims, wherein the switch is for selectively connecting each of the ports with the host controller, wherein the switch is electronically controllable to physically switch a communication line between the plurality of ports and the host controller.

6. The computing device of any one of the preceding claims, wherein the switch comprises one or more metal-oxide-semiconductor field-effect transistors for switching the communications.

7. The computing device of any one of the preceding claims, comprising a switch controller for electronically controlling the switch to switch communications between the ports and the host controller.

8. The computing device of any one of the preceding claims, comprising a plurality of solid-state storage devices, each of the solid-state storage devices being connected to a respective port of the plurality of ports.

9. The computing device of claim 8, wherein each of the solid-state storage devices comprises a Secure Digital storage device.

10. A method for selectively communicating a host controller of a computing device to a plurality of solid-state storage devices connected to a respective plurality of ports of the computing device, the method comprising:
electronically controlling a switch of the computing device to control communications between the ports and the host controller.

11. The method of claim 10, wherein the electronically controlling a switch of the computing device comprises electronically controlling the switch to switch from a state in which a first of the ports is communicated with the host controller to a state in which a second of the ports is communicated with the host controller.

12. The method of claim 10 or 11, wherein the electronically controlling the switch comprises detecting a fault in one of the plurality of solid-state storage devices connected to a port of the plurality of ports, and in response to detection of the fault, electronically controlling the switch to communicate the host controller with another of the solid-state storage devices connected to another port of the plurality of ports.

13. The method of any one of claims 10 to 12, wherein the electronically controlling the switch comprises electronically controlling the switch to selectively communicate each of the ports with the host controller via a common communication line.

14. The method of any one of claims 10 to 13, wherein the switch is configurable to communicate a plurality of contacts of each of the ports with the host controller via respective communication lines, and the electronically controlling the switch comprises electronically controlling the switch to simultaneously switch communications between the plurality of contacts of the ports and the host controller.

15. The method of any one of claims 10 to 14, wherein the switch is for selectively connecting each of the ports with the host controller, and the electronically controlling the switch comprises physically switching a communication line between the plurality of ports and the host controller.
